# EUROPEAN PATENT SPECIFICATION

(11) **EP 1 102 667 B1**
(45) Date of publication and mention of the grant of the patent: **20.11.2002**
(21) Application number: 99931398.4
(22) Date of filing: 28.07.1999
(51) Int. Cl.: B29C 41/20, B05D 1/40, C04B 26/02, B29K 9/06

(54) **PROCESS FOR THE MANUFACTURE OF A MOULDING**
VERFAHREN ZUR HERSTELLUNG EINES FORMTEILES
FABRICATION D'UN MOULAGE

(30) Priority: 04.08.1998 ZA 9806973
(43) Date of publication of application: 30.05.2001
(73) Proprietor: Windsor Technologies Limited, Nassau RG20 OAY (BS)
(72) Inventor: SYMONS, Michael, Windsor, 0181 Pretoria (ZA)
(74) Representative: Ablewhite, Alan James
(86) International application number: IB9901332
(87) International publication number: WO00007791

(56) References cited:
- EP-A- 0 194 796
- EP-A- 0 285 929
- DE-A- 19 543 901
- US-A- 3 873 492
- US-A- 3 987 002
- US-A- 5 624 714
- US-A- 5 736 197
- DATABASE WPI Week 8203 Derwent Publications Ltd., London, GB; AN 1982-05097E XP002118933 & JP 56 159454 A (KURARAY CO LTD), 8 December 1981 (1981-12-08)
- DATABASE WPI Week 87443 Derwent Publications Ltd., London, GB; AN 1987-301801 XP002118934 & JP 62 210076 A (YOKOYAMA S), 16 September 1987 (1987-09-16)
- DATABASE WPI Week 9250 Derwent Publications Ltd., London, GB; AN 1992-412107 XP002118935 & JP 04 309589 A (SEKISUI CHEM IND CO LTD) , 2 November 1992 (1992-11-02)
- PATENT ABSTRACTS OF JAPAN vol. 004, no. 151 (C-028), 23 October 1980 (1980-10-23) & JP 55 098263 A (DAINIPPON TORYO CO LTD;OTHERS: 01), 26 July 1980 (1980-07-26)
- DATABASE WPI Week 8624 Derwent Publications Ltd., London, GB; AN 1986-152995 XP002118936 & JP 61 086484 A (TOYO SODA MFG CO LTD), 1 May 1986 (1986-05-01)

## Description

### BACKGROUND OF THE INVENTION

This invention relates to a process for the manufacture of a moulding, to a paste for use in the process, and to a moulding so manufactured.

Mouldings such as architectural mouldings, e.g skirting boards, cornices and door edgings, and picture and photo frames, are commonly manufactured from machined wood or wood products such as medium density fibre board, or from extruded thermoplastic materials, particularly polystyrene and polyvinyl chloride. As the availability of suitable wood for such mouldings, i.e. wood having a straight grain such as gelutong or ramin, principally sourced from the tropics, becomes more scarce as well as more expensive, extruded thermoplastic cellular core or foamed thermoplastics with integral skins are becoming more important alternatives.

US Patent No 5,514,318 to Robobond Limited teaches a process of manufacturing frames by forming a plastic extrusion, cutting the extrusion to length, and applying to the lengths a solvent based wood paste, which is then moulded or shaped to form the ornamentation on the surface of the extrusion. Thereafter, the element is allowed to dry.

US Patent No 5,508,103 to Marley Mouldings Inc, teaches a process for forming an extrusion having a hard skin with a portion of the profile having a decorative enhancement integral with the profile, by the use of an embossing technique on the profile before the extrusion cools, sets and hardens.

US Patent No 5,723,199 to Beddiplex Group teaches a method of making an ornamental frame by extruding thermoplastic material, extruding a further layer over it, bonding the one to the other whilst still molten, embossing the second extruded layer while still heat softened, and allowing the first and second materials to cool to form the ornamental frame member.

There is always a need however for new processes for the manufacture of mouldings.

### SUMMARY OF THE INVENTION

According to a first aspect of the invention there is provided a process for manufacturing a moulding, including the steps of:
(a) providing a substrate;
(b) providing a paste comprising:
   (i) 2% to 30% inclusive, preferably 5% to 23% inclusive, more preferably 15% to 18% inclusive of the combined mass of components (i) and (ii) of a thermoplastic elastomer;
   (ii) 70% to 98% inclusive, preferably 77% to 95% inclusive, more preferably 82% to 85% inclusive of the combined mass of components (i) and (ii) of a thermoplastic polymer;
   (iii) 250% to 450% inclusive, preferably 290% to 400% inclusive, more preferably 310% to 380% inclusive of the combined mass of components (i) and (ii) of an inorganic particulate filler; and
   (iv) an amount of a solvent to dissolve components (i) and (ii) and to wet component (iii) to form the paste;
(c) applying to the substrate a layer of the paste;
(d) during or after step (c) shaping the paste to a desired shape; and
(e) allowing the paste to dry so that it adheres to the substrate to form the moulding.

According to a second aspect of the invention there is provided a paste for use in the manufacture of a moulding, the paste comprising:
(i) 2% to 30% inclusive, preferably 5% to 23% inclusive, more preferably 15% to 18% inclusive of the combined mass of components (i) and (ii) of a thermoplastic elastomer;
(ii) 70% to 98% inclusive, preferably 77% to 95% inclusive, more preferably 82% to 85% inclusive of the combined mass of components (i) and (ii) of a thermoplastic polymer;
(iii) 250% to 450% inclusive, preferably 290% to 400% inclusive, more preferably 310% to 380% inclusive of the combined mass of components (i) and (ii) of an inorganic particulate filler; and
(iv) an amount of a solvent to dissolve components (i) and (ii) and to wet component (iii) to form the paste.

According to a third aspect of the invention there is provided a moulding formed from a substrate to which is applied a layer of a paste comprising:
(i) 2% to 30% inclusive, preferably 5% to 23% inclusive, more preferably 15% to 18% inclusive of the combined mass of components (i) and (ii) of a thermoplastic elastomer;
(ii) 70% to 98% inclusive, preferably 77% to 95% inclusive, more preferably 82% to 85% inclusive of the combined mass of components (i) and (ii) of a thermoplastic polymer;
(iii) 250% to 450% inclusive, preferably 290% to 400% inclusive, more preferably 310 to 380% inclusive of the combined mass of components (i) and (ii) of an inorganic particulate filler; and
(iv) an amount of a solvent to dissolve components (i) and (ii) and to wet component (iii) to form the paste;
the paste having been shaped to a desired shape and allowed to dry so that it adheres to the substrate to form the moulding.

By "a moulding" there is meant any ornamental edging or band and includes architectural mouldings such as skirting boards, cornices and door edgings, and also includes picture and photo frames and elements for the manufacture thereof.

### DESCRIPTION OF EMBODIMENTS

The first aspect of the invention is a process for manufacturing a moulding.

The first step of the process is to provide a substrate.

The substrate may be a plastics substrate. For example, the substrate may be a polymeric extrusion, preferably a cellular extrusion.

Preferably, the plastics material of the plastics substrate is a thermoplastic polymer which is the same as the thermoplastic polymer in the paste. For example, where the substrate is a polystyrene extrusion, then the thermoplastic polymer in the paste is preferably polystyrene, and when the substrate is a polyvinyl chloride extrusion, then the thermoplastic polymer in the paste is preferably polyvinyl chloride, so as to match expansion coefficients and to compatibilize the solvents.

Alternatively, the substrate may be a wood or other lignocellulosic material composite, for example a length of wood or a length of medium density fibre board.

In this case, the length of wood or medium density fibre board or the like is preferably surface impregnated and coated with a thermoplastic polymer to assist in achieving a good bond between the paste and the substrate.

For example, when the substrate is a length of medium density fibre board, the length of medium density fibre board may be treated with a composition comprising a thermoplastic polymer dissolved in a suitable solvent therefor. Thereafter, the solvent is evaporated off, leaving behind a coating of the thermoplastic polymer. The thermoplastic polymer in the paste is preferably the same as the thermoplastic polymer coating the length of medium density fibre board.

The second step of the process is to provide a paste.

Component (i) of the paste is a thermoplastic elastomer, also known as a thermoplastic rubber. Examples of suitable thermoplastic elastomers are those having styrene end blocks, and an elastomeric mid block such as for example butadiene, isoprene, ethylene and the like, i.e. those that have two different polymers in each molecule. Thus for example the thermoplastic elastomer may be a styrene-butadiene-styrene polymer, or a styrene-isoprene polymer, or an acrylonitrile-butadiene-styrene polymer and the like.

Specific examples of suitable thermoplastic elastomers are the Kraton grades by Shell Chemicals. The D series are unsaturated and suitable for interior applications, and are comprised of styrene butadiene styrene block copolymers which are linear, styrene-isoprene-styrene block copolymers which are linear, and styrene-butadiene radial copolymers .

The G series are fully hydrogenated grades for exterior applications and include styrene-ethylene/butylene-styrene block copolymers which are linear, and styrene-ethylene/propylene di block. The Kraton G range elastomers possess excellent resistance to oxygen, ozone and UV light degradation.

It is preferable to formulate the thermoplastic elastomer with a small proportion of a mineral oil as a plasticizer, for example a paraffinic mineral oil such as Shell Flex 371, 451 or 270 added in an amount of from 1% to 4% of the combined mass of components (i) and (ii). The addition of an amount of a mineral oil improves the flexibility of the elastomer and promotes softness, and minimises stickiness of the paste.

### Other optional additives to the thermoplastic elastomer include:

An anti oxidant such as Shell 330 in an amount of from 0,005% to 0,2% of the combined mass of components (i) and (ii).
A stabilizer in an amount of from 0,1% to 1% of the combined mass of components (iI) and (ii), such as a hindered phenol type, e.g. Irganox 1010 by Ciba-Geigy.
A silane in an amount of from 0,1% to 1% of the combined mass of components (i) and (ii) for adhesion promotion, an example being Silane A-189 by Union Carbide.
A UV inhibitor such as Tinuvin 770 or P by Ciba-Geigy, in an amount of from 0,1% to 1% of the combined mass of components (i) and (ii) when the moulding is intended for exterior use.

Component (ii) of the paste is a thermoplastic polymer such as for example polystyrene or polyvinyl chloride. In particular, where the substrate is a polystyrene extrusion, then the thermoplastic polymer is preferably polystyrene, and when the substrate is a polyvinyl chloride extrusion, then the thermoplastic polymer is preferably polyvinyl chloride.

The thermoplastic polymer provides the paste with cohesion, stability, and strength, and propagates adhesion to the substrate.

The paste comprises 2% to 30% inclusive, preferably 5% to 23% inclusive, more preferably 15% to 18% inclusive of the combined mass of components (i) and (ii) of the thermoplastic elastomer, and 70% to 98% inclusive, preferably 77% to 95% inclusive, more preferably 82% to 85% inclusive of the combined mass of components (i) and (ii) of the thermoplastic polymer. In other words the paste contains from 2 parts of thermoplastic elastomer to 98 parts of thermoplastic polymer, to 30 parts of thermoplastic elastomer to 70 parts of thermoplastic polymer, and so on.

Component (iv) of the paste is an amount of a solvent to dissolve components (i) and (ii) (and to wet component (iii) as described hereinafter) to form the paste. The solvent must have a solubility parameter suitable for both of components (i) and (ii). In this regard, the Hildebrand solubility parameters for various elastomeric mid blocks are approximately 7,9 for polyethylene/butylene, 8,1 for polyisoprene and 8,4 for polybutadiene. Thus, solvents with a solubility parameter between 6,9 and 9,4 are suitable for the dissolution of the thermoplastic elastomer. Solvents with a solubility parameter of 9,1 are best suited for polystyrene, when polystyrene is used as the thermoplastic polymer. Thus, overall, solvents with a solubility parameter between 6,9 and 10,1 are most suited for the paste of the invention.

The solvent may be an aliphatic, aromatic or chlorinated hydrocarbon, ketone or ester.

Examples of suitable solvents are dichloromethane, ethyl acetate, butyl acetate, toluene, acetone, methyl ethyl ketone, xylene, turpentine, and blends of solvents such as for example a blend of methyl ethyl ketone and hexane.

Preferably, a first solvent is used to dissolve the thermoplastic elastomer, and a second solvent is used to dissolve the thermoplastic polymer. Thus, for example, the thermoplastic elastomer is dissolved in the first solvent, and the thermoplastic polymer is dissolved in the second solvent. Thereafter, these two solutions are combined and mixed. At this stage, the inorganic particulate filler component (iii) may be added, either in dry form, or already wetted with the first or the second or a further solvent. As a specific example, the thermoplastic elastomer is preferably dissolved in dichloromethane, the thermoplastic polymer, when it is polyvinyl chloride, is preferably dissolved in methyl ethyl ketone, and when it is polystyrene, is preferably dissolved in acetone, and the inorganic particulate filler is wetted with acetone.

Preferably, the solvent or solvents used to dissolve components (i) and (ii) are present in an amount of from 100% to 200%, more preferably from 120% to 160% inclusive of the mass of components (i) and (ii). However, generally, the quantity of solvent or solvents used must be sufficient to form the paste, and this will obviously vary with the nature of the components (i) to (iii) and the quantities thereof present.

The solvent not only dissolves the components (i) and (ii) and wets component (iii) to form the paste, but, when the substrate is a plastics substrate, or when a lignocellulosic substrate has been coated with a coating of a thermoplastic polymer, the solvent or solvents may also dissolve part of the outer skin of the plastics substrate, resulting in the formation of a chemical weld between the paste and the substrate.

Component (iii) of the paste is an amount of an inorganic particulate filler. The term "particulate" is intended to include short fibrous elements.

Examples of suitable inorganic fillers are calcium sulphate alpha-or beta-hemidrate or hydrated gypsum, talc, bentonite, diatomaceous earth, fine particle size milled exfoliated vermiculite, barytes, calcium carbonate, perlite, silica fume, hollow glass microballoons, wollastonite, milled rockwool, milled ceramic fibres or milled glass fibres or the like.

Preferred inorganic particulate fillers include calcium sulphate alpha-or beta-hemidrate or hydrated gypsum, talc, bentonite, diatomaceous earth, fine particle size milled exfoliated vermiculite, barytes, calcium carbonate and perlite and mixtures of two or more thereof.

The most preferred inorganic filler is calcium sulphate alpha-or beta-hemidrate or hydrated gypsum, most preferably calcium sulphate beta-hemidrate, for reasons of cost, propagation of drying and its non-abrasive nature, optionally in combination with calcium carbonate and perlite.

An example of a particularly preferred inorganic filler combination is calcium sulphate beta-hemidrate (preferably in an amount of 90% by mass of the filler), and small particle size perlite.

Specific examples of these materials will now be given.

As stated above, the calcium sulphate may be alpha-or beta-hemidrate or may be in the form of hydrated gypsum. The perlite may be for example expanded perlite such as Genulite by Mandoval Perlite, having a particle size of below 0,5 mm diameter or Dicalite 411 by Mandoval Perlite having a particle size of below 0,25 mm. The expanded vermiculite may be for example the Zonolites or FPSV grades of W R Grace which have a small particle size, typically of less than 0,5 mm diameter. The silica fume may be for example CSF 90 by Anglo Alpha. The hollow glass micro balloons may be Fillite by Fillite Runcorn Limited or Cenfill or cenolite by Ash Resources. The fibrous type materials, e.g wollastonite, milled rockwool, ceramic fibre or milled glass fibre preferably have a fibre length of below 1 mm.

The paste comprises 250% to 450% inclusive, preferably 290% to 400% inclusive, more preferably 310% to 380% inclusive of the combined mass of components (i) and (ii) of the inorganic particulate filler. In other words the paste contains from 250 parts of the filler to 100 parts of components (i) and (ii) to 450 parts of the filler to 100 parts of components (i) and (ii), and so on.

It is to be noted that the components (i), (ii) and (iii) together constitute at least 90%, preferably at least 95% of the mass of the paste (excluding the solvent or solvents). In other words, any optional components may constitute only 10%, preferably only 5% of the mass of the paste (excluding the solvent or solvents).

The paste must have the following characteristics:
it must dry quickly (which is a function of the inorganic particulate filler and the choice of solvent);
it must not shrink or crack on drying (which is a function of the inorganic particulate filler);
it must provide a product which is able to be cut or guillotined;
it must have an expansion coefficient similar to the substrate (which is why it is preferable to have the same thermoplastic polymer in the paste as forms the plastic substrate or as is coated onto a lignocellulosic substrate);
it must have good adhesion to the substrate (which is a function of the thermoplastic elastomer);
it must not be sticky (which is a function of the inorganic particulate filler and the oil, if present); and
it must allow for the rapid release of the solvent or solvents in order to minimise the time taken for the process (which is a function of the inorganic particulate filler and the solvent choice);
it must have a good impact resistance (which is a function of the thermoplastic elastomer);
it must be capable of exhibiting fine detail (which is a function of the inorganic particulate filler and its particle size).

The inorganic particulate filler also acts as an extender and allows variation of the density of the paste and thus the final product.

The paste may include various optional components as follows.

The first optional component of the paste is a suitable pigment or dye to colour the paste to a desired colour. For example, if it is desired that the moulding be given a natural wood appearance, the paste may be coloured yellow and the pigment of choice is then yellow oxide such as Bayferox 920 by Bayer.

A second optional component of the paste is an amount of a hydrocarbon resin, to promote softness and tack, such as Kristalex 5140 by Hercules.

The third step of the process is to apply the paste to the substrate in any suitable manner, for example by extrusion of the paste onto the substrate.

In step (d) of the process of the invention, during or after step (c), the paste is shaped to a desired shape. The shaping may be achieved by moulding, profiling or embossing the paste, while it is still soft. As indicated, this shaping may take place while the paste is being applied to the substrate or once it has been applied to the substrate.

In step (e) of the process of the invention, the paste is allowed to dry so that it adheres to the substrate to form the moulding.

The paste may be applied to the moulding at a thickness of from 0,5mm to 15mm, depending on the end use of the moulding.

An example of the invention will now be given.

### Example 1

| | |
|---|---|
| Polystyrene | 500g |
| Acetone | 650g |

The polystyrene is dissolved in the acetone to form a first solution.

| | |
|---|---|
| Kraton CODE D-KD-1102CS by Shell Chemicals being a styrene butadiene styrene thermoplastic elastomer | 50g |
| Kraton CODE DO-KD-4113CS oil modified by Shell Chemicals | 50g |
| Dichloromethane | 250g |

The two types of Kraton are dissolved in the dichloromethane to form a second solution and the two solutions are mixed.

| | |
|---|---|
| Calcium sulphate beta-hemidrate | 2 000g |
| Perlite (Dicalite 411) | 75g |
| Acetone | 350 ml |

The three inorganic fillers are wetted with the acetone and then added to the combined first and second solutions to give the paste.

The paste so produced is kneadable, soft and easily deformed, but without being sticky to the touch. It has excellent adhesion to the substrate, good flexibility, resistance to cracking, and stability, and dries within two hours of application.

The paste is extruded at an appropriate thickness and profile onto a substrate, preferably a polystyrene substrate. Thereafter, an embossing wheel presses the paste to the substrate and imposes upon the paste the profile required which is an exact female mirror image of the male profile of the embossing wheel.

Any waste paste is collected and reformulated so that there is no wastage.

Thereafter, the paste is allowed to dry to form the moulding.

The result is a moulding which may be used in place of conventional mouldings.

## Claims

1. A process for manufacturing a moulding including the steps of:
(a) providing a substrate;
(b) providing a paste comprising:
(i) 2% to 30% inclusive of the combined mass of components (i) and (ii) of a thermoplastic elastomer;
(ii) 70% to 98% inclusive of the combined mass of components (i) and (ii) of a thermoplastic polymer;
(iii) 250% to 450% inclusive of the combined mass of components (i) and (ii) of an inorganic particulate filler; and
(iv) an amount of a solvent to dissolve components (i) and (ii) and to wet component (iii) to form the paste;
(c) applying to the substrate a layer of the paste;
(d) during or after step (c) shaping the paste to a desired shape; and
(e) allowing the paste to dry so that it adheres to the substrate to form the moulding.

2. A process according to claim 1 wherein the substrate is a plastics substrate.

3. A process according to claim 2 wherein the plastics substrate is formed from a thermoplastic polymer which is the same as the thermoplastic polymer in the paste.

4. A process according to claim 2 or claim 3 wherein the substrate is selected from the group consisting of a polystyrene extrusion and a polyvinyl chloride extrusion.

5. A process according to claim 1 to 4 wherein the substrate is a wood or other lignocellulosic material composite.

6. A process according to claim 5 wherein the substrate has been surface impregnated and coated with a thermoplastic polymer.

7. A process according to any one of claims 1 to 6 wherein the paste comprises:
(i) 15% to 18% inclusive of the combined mass of components (i) and (ii) of the thermoplastic elastomer;
(ii) 82% to 85% inclusive of the combined mass of components (i) and (ii) of the thermoplastic polymer; and
(iii) 310% to 380% inclusive of the combined mass of components (i) and (ii) of the inorganic particulate filler.

8. A process according to any one of claims 1 to 7 wherein in step (b), the thermoplastic elastomer is dissolved in a first solvent, the thermoplastic polymer is dissolved in a second solvent, the two solutions are mixed, and then there is added thereto the inorganic particulate filler, optionally wetted with a solvent, to form the paste.

9. A process according to any one of claims 1 to 8 wherein the inorganic particulate filler is selected from the group consisting of calcium sulphate alpha-or beta-hemihydrate, hydrated gypsum, talc, bentonite, diatomaceous earth, fine particle size milled exfoliated vermiculite, barytes, calcium carbonate, perlite, silica fume, hollow glass microballoons, wollastonite, milled rockwool, milled ceramic fibres and milled glass fibres, and a mixture of two or more thereof.

10. A process according to claim 9 wherein the inorganic particulate filler comprises calcium sulphate beta-hemihydrate.

11. A process according to any one of claims 1 to 10 wherein in step (d) the paste is shaped to a desired shape by moulding, profiling or embossing the paste while it is still soft.

12. A paste for use in the manufacture of a moulding comprising:
(i) 2% to 30% inclusive of the combined mass of components (i) and (ii) of a thermoplastic elastomer;
(ii) 70% to 98% inclusive of the combined mass of components (i) and (ii) of a thermoplastic polymer;
(iii) 250% to 450% inclusive of the combined mass of components (i) and (ii) of an inorganic particulate filler; and
(iv) an amount of a solvent to dissolve components (i) and (ii) and to wet component (iii) to form the paste.

13. A paste according to claim 12 comprising:
(i) 15% to 18% inclusive of the combined mass of components (i) and (ii) of the thermoplastic elastomer;
(ii) 82% to 85% inclusive of the combined mass of components (i) and (ii) of the thermoplastic polymer; and
(iii) 310% to 380% inclusive of the combined mass of components (i) and (ii) of the inorganic particulate filler.

14. A paste according to claim 12 or claim 13 wherein the thermoplastic elastomer is dissolved in a first solvent, the thermoplastic polymer is dissolved in a second solvent, the two solutions are mixed, and then there is added thereto the inorganic particulate filler, optionally wetted with a solvent, to form the paste.

15. A paste according to any one of claims 12 to 14 wherein the inorganic particulate filler is selected from the group consisting of calcium sulphate alpha-or beta-hemihydrate, hydrated gypsum, talc, bentonite, diatomaceous earth, fine particle size milled exfoliated vermiculite, barytes, calcium carbonate, perlite, silica fume, hollow glass microballoons, wollastonite, milled rockwool, milled ceramic fibres and milled glass fibres, and a mixture of two or more thereof.

16. A paste according to claim 15 wherein the inorganic particulate filler comprises calcium sulphate beta-hemihydrate.

17. A moulding formed from a substrate to which is applied a layer of a paste comprising:
(i) 2% to 30% inclusive of the combined mass of components (i) and (ii) of a thermoplastic elastomer;
(ii) 70% to 98% inclusive of the combined mass of components (i) and (ii) of a thermoplastic polymer;
(iii) 250% to 450% inclusive of the combined mass of components (i) and (ii) of an inorganic particulate filler; and
(iv) an amount of a solvent to dissolve components (i) and (ii) and to wet component (iii) to form the paste;
the paste having been shaped to a desired shape and allowed to dry so that it adheres to the substrate to form the moulding.

18. A moulding according to claim 17 wherein the paste comprises:
(i) 15% to 18% inclusive of the combined mass of components (i) and (ii) of the thermoplastic elastomer;
(ii) 82% to 85% inclusive of the combined mass of components (i) and (ii) of the thermoplastic polymer; and
(iii) 310% to 380% inclusive of the combined mass of components (i) and (ii) of the inorganic particulate filler.

19. A moulding according to claim 17 or claim 18 wherein the inorganic particulate filler is selected from the group consisting of calcium sulphate alpha-or beta-hemihydrate, hydrated gypsum, talc, bentonite, diatomaceous earth, fine particle size milled exfoliated vermiculite, barytes, calcium carbonate, perlite, silica fume, hollow glass microballoons, wollastonite, milled rockwool, milled ceramic fibres and milled glass fibres, and a mixture of two or more thereof.

20. A moulding according to claim 19 wherein the inorganic particulate filler comprises calcium sulphate beta-hemihydrate.

## Patentansprüche

1. Verfahren zur Herstellung eines Formteils, mit folgenden Schritten:
(a) Vorsehen eines Substrats,
(b) Vorsehen einer Paste, welche folgende Bestandteile aufweist:
(i) 2% bis einschließlich 30% der kambinierten Masse von Komponenten (i) und (ii) eines thermoplastischen Elastomers,
(ii) 70% bis einschließlich 98% der kombinierten Masse von Komponenten (i) und (ii) eines thermoplastischen Polymers,
(iii) 250% bis einschließlich 450% der kombinierten Masse von Komponenten (i) und (ii) eines anorganischen Teilchenfüllers, und
(iv) eine Menge eines Lösungsmittels, um die Komponenten (i) und (ii) zu lösen und die Komponente (iii) zu befeuchten, um die Paste zu bilden,
(c) Aufbringen einer Schicht der Paste auf das Substrat,
(d) Formen der Paste in eine gewünschte Form während oder nach Schritt (c), und
(e) Ermöglichen, daß die Paste trocknet, so daß sie an dem Substrat anhaftet, um das Formteil zu bilden.

2. Verfahren nach Anspruch 1, bei dem das Substrat ein Kunststoffsubstrat ist.

3. Verfahren nach Anspruch 2, bei dem das Kunststoffsubstrat aus einem thermoplastischen Polymer gebildet ist, welches dasselbe Polymer ist, wie das thermoplastische Polymer in der Paste.

4. Verfahren nach Anspruch 2 oder 3, bei dem das Substrat aus der Gruppe ausgewählt ist, die besteht aus einer Polystyrenexstrusion und einer Polyvinylchloridextrusion.

5. Verfahren nach Anspruch 1 bis 4, bei dem das Substrat ein Holz oder ein anderes Verbundmaterial aus Lignozellulose ist.

6. Verfahren nach Anspruch 5, bei dem das Substrat auf der Oberfläche imprägniert und mit einem thermoplastischen Polymer beschichtet wurde.

7. Verfahren nach einem der Ansprüche 1 bis 6, bei dem die Paste folgende Bestandteile aufweist:
(i) 15% bis einschließlich 18% der kombinierten Masse der Komponenten (i) und (ii) des thermoplastischen Elastomers,
(ii) 82% bis einschließlich 85% der kombinierten Masse der Komponenten (i) und (ii) des thermoplastischen Polymers, und
(iii) 310% bis einschließlich 380% der kombinierten Masse der Komponenten (i) und (ii) des anorganischen Teilchenfüllers.

8. Verfahren nach einem der Ansprüche 1 bis 7, bei dem in Schritt (b) das thermoplastische Elastomer in einem ersten Lösungsmittel gelöst wird, das thermoplastische Polymer in einem zweiten Lösungsmittel gelöst wird, die beiden Lösungen gemischt werden und diesen dann der anorganische Teilchenfüller auf Wunsch mit einem Lösungsmittel befeuchtet zugefügt wird, um die Paste zu bilden.

9. Verfahren nach einem der Ansprüche 1 bis 8, bei dem der anorganische Teilchenfüller ausgewählt ist aus der Gruppe, die besteht aus Kalziumsulfat, Alpha- oder Beta-Hemihydrat, hydriertem Gips, Talk, Bentonit, Kieselgur, in feine Teilchengröße gemahlenem aufgeblättertem Vermikulit, Baryte-Erde, Kalziumkarbonat, Perlit, Quarzrauch, Mikrokügelchen aus hohlem Glas, Wollastonit, gemahlener Steinwolle, gemahlenen Keramikfasern und gemahlenen Glasfasern, und einer Mischung von zwei oder mehreren aus dieser Gruppe.

10. , Verfahren nach Anspruch 9, bei dem der anorganische Teilchenfüller Kalziumsulfatbetahemihydrat aufweist.

11. Verfahren nach einem der Ansprüche 1 bis 10, bei dem in Schritt (d) die Paste in eine gewünschte Form durch Formen, Profilieren oder Prägen der Paste geformt wird, während sie noch weich ist.

12. Paste zur Verwendung bei der Herstellung eines Formteils mit folgenden Bestandteilen:
(i) 2% bis einschließlich 30% der kombinierten Masse von Komponenten (i) und (ii) eines thermoplastischen Elastomers,
(ii) 70% bis einschließlich 98% der kombinierten Masse von Komponenten (i) und (ii) eines thermoplastischen Polymers,
(iii) 250% bis einschließlich 450% der kombinierten Masse von Komponenten (i) und (ii) eines anorganischen Teilcheufüllers, und
(iv) eine Menge eines Lösungsmittels, um die Komponenten (i) und (ii) zu lösen und die Komponente (iii) zu befeuchten, um die Paste zu bilden.

13. Paste nach Anspruch 12 mit folgenden Bestandteilen:
(i) 15% bis einschließlich 18% der kombinierten Masse der Komponenten (i) und (ii) des thermoplastischen Elastomers,
(ii) 82% bis einschließlich 85% der kombinierten Masse der Komponenten (i) und (ii) des thermoplastischen Polymers, und
(iii) 310% bis einschließlich 380% der kombinierten Masse der Komponenten (i) und (ii) des anorganischen Teilchenfüllers.

14. Paste nach Anspruch 12 oder 13, bei dem das thermoplastische Elastomer in einem ersten Lösungsmittel gelöst wird, das thermoplastische Polymer in einem zweiten Lösungsmittel gelöst wird, die beiden Lösungen gemischt werden und diesen dann der anorganische Teilchenfüller auf Wunsch mit einem Lösungsmittel befeuchtet zugefügt wird, um die Paste zu bilden.

15. Paste nach einem der Ansprüche 12 bis 14, bei dem der anorganische Teilchenfüller ausgewählt ist aus der Gruppe, die besteht aus Kalziumsulfat, Alpha- oder Beta-Hemihydrat, hydriertem Gips, Talk, Bentonit, Kieselgur, in feine Teilchengröße gemahlenem aufgeblättertem Vermikulit, Baryte-Erde, Kalziumkarbonat, Perlit, Quarzrauch, Mikrokügelchen aus hohlem Glas, Wollastonit, gemahlener Steinwolle, gemahlenen Keramikfasern und gemahlenen Glasfasern, und eine Mischung von zwei oder mehreren aus dieser Gruppe.

16. Paste nach Anspruch 15, bei dem der anorganische Teilchenfüller Kalziumsulfatbetahemihydrat aufweist.

17. Formteil, gebildet aus einem Substrat, auf das eine Schicht einer Paste mit folgenden Bestandteilen aufgebracht ist:
(i) 2% bis einschlzeßlich 30% der kombinierten Masse von Komponenten (i) und (ii) eines thermoplastischen Elastomers,
(ii) 70% bis einschließlich 98% der kombinierten Masse von Komponenten (i) und (ii) eines thermoplastischen Polymers,
(iii) 250% bis einschließlich 450% der kombinierten Masse von Komponenten (i) und (ii) eines anorganischen Teilchenfüllers, und
(iv) eine Menge eines Lösungsmittels, um die Komponenten (i) und (ii) zu lösen und die Komponente (iii) zu befeuchten, um die Paste zu bilden,
wobei die Paste in eine gewünschte Form geformt ist und trocknen konnte, so daß sie an dem Substrat anhaftet, um das Formteil zu bilden.

18. Formteil nach Anspruch 17, bei dem die Paste folgende Bestandteile aufweist:
(i) 15% bis einschließlich 18% der kombinierten Masse der Komponenten (i) und (ii) des mennoplastischen Elastomers,
(ii) 82% bis einschließlich 85% der kombinierten Masse der Komponenten (i) und (ii) des thermoplastischen Polymers, und
(iii) 310% bis einschließlich 380% der kombinierten Masse der Komponenten (i) und (ii) des anorganischen Teilchenfüllers.

19. Formteil nach Anspruch 17 oder 18, bei dem der anorganische Teilchenfüller ausgewählt ist aus der Gruppe, die besteht aus Kalziumsulfat, Alpha- oder Beta-Hemihydrat, hydriertem Gips, Talk, Bentonit, Kieselgur, in feine Teilchengröße gemahlenem aufgeblättertem Vermikulit, Baryte-Erde, Kalziumkarbonat, Perlit, Quarzrauch, Mikrokügelchen aus hohlem Glas, Wollastonit, gemahlener Steinwolle, gemahlenen Keramikfasem und gemahlenen Glasfasern und eine Mischung von zwei oder mehreren aus dieser Gruppe.

20. Formteil nach Anspruch 19, bei dem der anorganische Teilchenfüller Kalziumsulfatbetahemihydrat aufweist.

## Revendications

1. Procédé de fabrication d'un objet moulé comprenant les étapes de :
(a) fourniture d'un substrat ;
(b)fourniture d'une pâte comprenant :
(i) 2 % à 30 % inclus de la masse combinée des composants (i) et (ii) d'un élastomère thermoplastique ;
(ii) 70 % à 98 % inclus de la masse combinée des composants (i) et (ii) d'un polymère thermoplastique ;
(iii) 250 % à 450 % inclus de la masse combinée des composants (i) et (ii) d'une charge particulaire inorganique ; et
(iv) une quantité d'un solvant pour dissoudre les composants (i) et (ii) et pour humecter le composant (iii) pour former la pâte ;
(c) application au substrat d'une couche de la pâte ;
(d) pendant ou après l'étape (c) mise en forme de la pâte en une forme voulue ; et
(e) séchage de la pâte pour qu'elle adhère au substrat pour former l'objet moulé.

2. Procédé selon la revendication 1 où le substrat est un substrat en matière plastique.

3. Procédé selon la revendication 2 où le substrat en matière plastique est formé à parbr d'un polymère thermoplastique qui est le même que le polymère tnermoplastique dans la pâte.

4. Procédé selon la revendication 2 ou la revendication 3 où le substrat est choisi dans le groupe consistant en un produit d'extrusion en polystyrène et un produit d'extrusion en poly(chlorure de vinyle).

5. Procédé selon les revendications 1 à 4 où le substrat est un bois ou un autre composite de matière lignocellulosique.

6. Procédé selon la revendication 5 où le substrat a été imprégné en surface et revêtu d'un polymère thermoplastique.

7. Procédé selon l'une quelconque des revendications 1 à 6 où la pâte comprend :
(i) 15 % à 18 % inclus de la masse combinée des composants (i) et (ii) de l'élastomère thermoplastique ;
(ii) 82 % à 85 % inclus de la masse combinée des composants (i) et (ii) du polymère thermoplastique ; et
(iii) 310 % à 380 % inclus de la masse combinée des composants (i) et (ii) de la charge particulaire inorganique.

8. Procédé selon l'une quelconque des revendications 1 à 7 où, dans l'étape (b), l'élastomère thermoplastique est dissous dans un premier solvant, le polymère thermoplastique est dissous dans un second solvant, les deux solutions sont mélangées, puis la charge particulaire inorganique, éventuellement humectée avec un solvant, est ajoutée à celles-ci pour former la pâte.

9. Procédé selon lune queloonque des revendications 1 à 8 où la charge particulaire inorganique est choisie dans le groupe consistant en le sulfate de calcium α- ou β-hémihydraté, le gypse hydraté, le talc, la bentonite, la terre de diatomées, la vermiculite exfoliée broyée à fine taille de particules, les barytes, le carbonate de calcium, la perlite, la silice fumée, les microballons en verre creux, la wollastonite, la laine de roche broyée, les fibres céramiques broyées et les fibres de verre broyées, et un mélange de deux ou plusieurs des précédents.

10. Procédé selon la revendication 9 où la charge particulaire inorganique comprend du sulfate de calcium β-hémihydraté.

11. Procédé selon l'une quelconque des revendications 1 à 10 où, dans l'étape (d), la pâte est mise en forma en une forme voulue par moulage, profilage ou estampage de la pâte tandis qu'elle est encore molle.

12. Pâte destinée à être utilisée dans la fabrication d'un objet moulé comprenant :
(i) 2% à 30 % inclus de la masse combinée des composants (i) et (ii) d'un élastomère thermoplastique ;
(il) 70 % à 98 % inclus de la masse combinée des composants (i) et (ii) d'un polymère thermoplastique ;
(iii) 250 % à 450 % indus de la masse combinée des composants (i) et (ii) d'une charge particulaire inorganique ; et
(iv) une quantité d'un solvant pour dissoudre les composants (i) et (ii) et pour humecter le composant (iii) pour former la pâte.

13. Pâte selon la revendication 12 comprenant :
(i) 15 % à 18 % indus de la masse combinée des composants (i) et (ii) de l'élastomère thermoplastique ;
(ii) 82 % à 85 % inclus de la masse combinée des composants (i) et (ii) du polymère thermoplastique ; et
(iii) 310 % à 380 % inclus de la masse combinée des composants (i) et (ii) de la charge particulaire inorganique,

14. Pâte selon la revendication 12 ou la revendication 13 où l'élastomère thermoplastique est dissous dans un premier solvant, le polymère thermoplastique est dissous dans un second solvant, les deux solutions sont mélangées, puis la charge particulaire inorganique, éventuellement humectée avec un solvant, est ajoutée à celles-ci pour former la pâte.

15. Pâte salon l'une quelconque des revendications 12 à 14 où la charge particulaire inorganique est choisie dans le groupe consistant en le sulfate de calcium α- ou β-hémihydraté, le gypse hydraté, le talc, la bentonite, la terre de diatomées, la vermiculite exfollée broyée à fine taille de particules, les barytes, le carbonate de calcium, la perlite, la silice fumée, les microballons en verre creux, la wollastonite, la laine de roche broyée, les fibres céramiques broyées et les fibres de verre broyées, et un mélange de deux ou plusieurs des précédents.

16. Pâte selon la revendication 15 où la charge particulaire inorganique comprend du sulfate de calcium β-hémihydraté.

17. Objet moulé formé à partir d'un substrat auquel est appliquée une couche d'une pâte comprenant :
(i) 2 % à 30 % inclus de la masse combinée des oomposants (i) et (ii) d'un élastomère thermoplastique ;
(ii) 70 % à 98 % inclus de la masse combinée des composants (i) et (ii) d'un polymère thermoplastique ;
(iii) 250 % à 450 % inclus de la masse combinée des composants (i) et (ii) d'une charge particulaire inorganique ; et
(iv) une quantité d'un solvant pour dissoudre les composants (i) et (ii) et pour humecter le composant (iii) pour former la pâte ;
la pâte ayant été mise en forme en une forme voulue et séchée de sorte qu'elle adhère au substrat pour former l'objet moulé.

18. Objet moulé selon la revendicalion 17 où la pâte comprend :
(i) 15 % à 18 % inclus de la masse combinée des composants (i) et (ii) de l'élastomère thermoplastique ;
(ii) 82 % à 85 % indus de la masse combinée des composants (i) et (ii) du polymère thermoplastique ; et
(iii) 310 % à 380 % inclus de la masse combinée des composants (i) et (ii) de la charge particulaire inorganique.

19. Objet moulé selon la revendication 17 ou la revendication 18 où la charge particulaîre inorganique est choisie dans le groupe consistant en le sulfate de calcium α- ou β-hémihydraté, le gypse hydraté, le talc, la bentonite, la terre de diatomées, la vermiculite exfoliée broyée à fine taille de particules, les barytes, le carbonate de calcium, la perlite, la silice fumée, les microballons en verre creux, la wollastonite, la laine de roche broyée, les fibres céramiques broyées et les fibres de verre broyées, et un mélange de deux ou plusieurs des précédents.

20. Objet moulé selon la revendication 19 où la charge particulaire inorganique comprend du sulfate de calcium β-hémihydraté.
